# EUROPEAN PATENT APPLICATION

(11) **EP 3 118 667 A1**
(43) Date of publication of application: **18.01.2017**
(21) Application number: 16152034.1
(22) Date of filing: 20.01.2016
(51) Int. Cl.: G02B 27/01

(54) **DISPLAY DEVICE**

(30) Priority: 17.07.2015 KR 20150101540
(71) Applicant: LG Electronics Inc., Seoul 07336 (KR)
(72) Inventor: KIM, Youngjin, 08592 Seoul (KR); KIM, Dongwook, 08592 Seoul (KR); LEE, Kyoungil, 08592 Seoul (KR); RYU, Juhyeok, 08592 Seoul (KR)
(74) Representative: Vossius & Partner Patentanwälte Rechtsanwälte mbB

(57) **Abstract**

Disclosed is a display device including a light source to provide first linearly polarized light, a first mirror to reflect the first linearly polarized light, a phase retarder to convert the first linearly polarized light into first circularly polarized light, and a second mirror to reflect the first circularly polarized light as second circularly polarized light. The second circularly polarized light is converted into second linearly polarized light having a different polarization direction from that of the first linearly polarized light. The first mirror is configured as a polarization reflection mirror to reflect the first linearly polarized light and to pass the second linearly polarized light, and the first mirror is provided in a path of the second linearly polarized light. The second linearly polarized light passes through the first mirror and is reflected by a windshield so as to transmit an image to a user.

## Description

The present invention relates to a display device and, more particularly, to a Head Up Display (HUD) device for vehicles, which may effectively transmit driving information to a driver while a vehicle is being driven.

In order to more effectively transmit driving information to a driver while a vehicle is being driven, studies to a next generation display device, which is called a Head Up Display (HUD) device, are being actively conducted.

A HUD device is a front display device that displays driving information on the windshield of a vehicle while the vehicle is being driven. This was originally introduced in airplanes in order to secure the pilot's view.

In recent years, with the development of future vehicles as well as an increase in the amount of information to be transmitted to a driver, the HUD device has begun to be applied to vehicles.

In particular, in consideration of the fact that a variety of vehicle displays including a navigation system are inconvenient to use and entail the risk of causing accidents because a screen is not located in the driver's forward field of view, the HUD device has been studied as means to replace or complement these vehicle displays.

The HUD device displays information, required to drive a vehicle, in a three-dimensional way, in the driver's forward field of view, so as to overlap the scene in front of the vehicle. Drivers of vehicles equipped with HUD devices do not need to move their eyes while driving in order to check, for example, the RPM of the vehicle indicated on a dashboard or turn signals.

At this time, since in the case of vehicles, unlike airplanes, the scene in front of the vehicle constantly changes, the reflective surface of the windshield requires a high reflectance in order to ensure good perception of displayed images, and the transmittance of the windshield must be 70% or more in order to secure forward visibility.

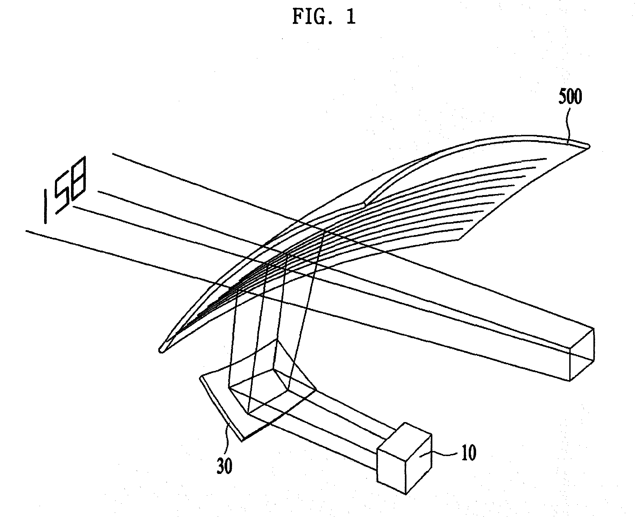

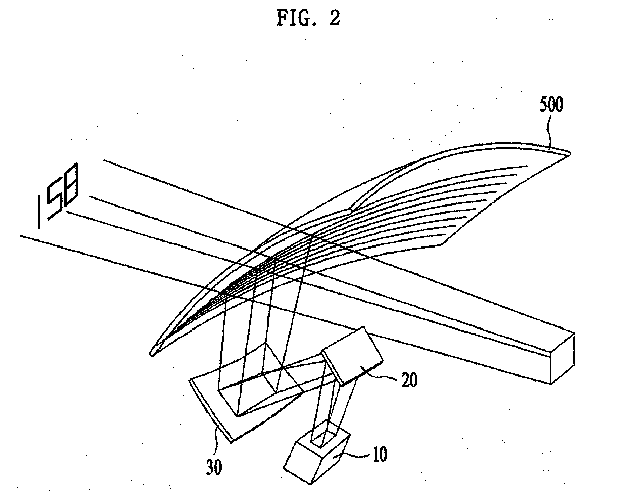

FIG. 1 is a view schematically illustrating the configuration of an HUD device in accordance with one embodiment of the related art. FIG. 2 is a view schematically illustrating the configuration of an HUD device in accordance with another embodiment of the related art.

Referring to FIG. 1, a display device 10, configured to display driving information such as, for example, the RPM of a vehicle, traffic information, and navigation information, outputs the information as an image via a screen thereof, and light beams of the output image are reflected by a concave mirror 30 and introduced into a windshield 500. Then, the image, projected on the windshield 500, is transmitted to the driver's eyes. At this time, the image, transmitted to the driver's eyes, has a prescribed angle in relation to the driver's forward field of view and overlaps the scene in the driver's forward field of view at a position spaced apart from the driver's eyes by a given distance, thereby being perceived as a virtual image by the driver.

However, in the HUD device of the related art, in order to transmit large amounts of driving information to the driver, the size of the virtual image needs to be increased. Increasing the size of the virtual image may need not only to increase the size of the concave mirror 30 provided in the HUD device, but also to secure an optical path from the display device 10 to the windshield 500.

As illustrated in FIG. 2, in the HUD device in accordance with another embodiment of the related art, the HUD device includes a reflection mirror 20, in addition to the display device 10 and the concave mirror 30. As such, the reflection mirror 20 may secure the optical path, which results in a reduction in the volume of the HUD device.

However, there is a limitation to the extent to which the volume of the HUD device can be reduced due to interference between the reflection mirror 20 and light beams, and it is problematic to install the HUD device having a large size in the limited space inside the vehicle.

Accordingly, the present invention is directed to a display device that substantially obviates one or more problems due to limitations and disadvantages of the related art.

An object of the present invention is to provide a display device, which provides a HUD device.

In addition, another object of the present invention is to provide a display device, which may increase the size of a virtual image displayed on a windshield, thereby providing a large screen to realize the provision of various pieces of information.

In addition, another object of the present invention is to provide a display device, which may have a reduced volume thereof, thereby ensuring the efficient use of a space when installed inside a vehicle.

In addition, a further object of the present invention is to provide a display device, which may achieve a compact configuration thanks to minimal distances between inner components.

Additional advantages, objects, and features will be set forth in part in the description which follows and in part will become apparent to those having ordinary skill in the art upon examination of the following or may be learned from practice. The objectives and other advantages may be realized and attained by the structure particularly pointed out in the written description and claims hereof as well as the appended drawings.

To achieve these objects and other advantages and in accordance with the purpose of the invention, as embodied and broadly described herein, in accordance with an aspect of the present invention, a display device includes a light source configured to provide first linearly polarized light that is linearly polarized in a given direction, a first mirror configured to reflect the first linearly polarized light, a phase retarder configured to convert the first linearly polarized light, passing therethrough, into first circularly polarized light, and a second mirror configured to cause the first circularly polarized light, introduced thereinto, to be reflected as second circularly polarized light, wherein the second circularly polarized light is converted into second linearly polarized light, which is linearly polarized in a different direction from that of the first linearly polarized light, while passing through the phase retarder, wherein the first mirror is configured as a polarization reflection mirror to reflect the first linearly polarized light and to pass the second linearly polarized light, and the first mirror is provided in a path of the second linearly polarized light, and wherein the second linearly polarized light passes through the first mirror and is reflected by a windshield so as to transmit an image to a user.

To achieve the above-described objects, in the display device according to the present invention, the light source may include a display panel configured to provide an image to be transmitted to the user, and a first polarizer configured to linearly polarize light, provided by the display panel, in a given direction.

To achieve the above-described objects, in the display device according to the present invention, the second circularly polarized light reflected by the second mirror may form an image, and the image may be a virtual image.

To achieve the above-described objects, in the display device according to the present invention, the second mirror may have an incident surface of the first circularly polarized light, and the incident surface may have a concave curvature.

To achieve the above-described objects, in the display device according to the present invention, a path of light from the light source to the second mirror may be present within a focal length of the second mirror.

To achieve the above-described objects, in the display device according to the present invention, the phase retarder may be a quarter-wave plate configured to convert a phase of light passing therethrough by a quarter wave.

To achieve the above-described objects, in the display device according to the present invention, the first linearly polarized light may include S-polarized light, and the second linearly polarized light may include P-polarized light.

To achieve the above-described objects, in the display device according to the present invention, the first linearly polarized light may include P-polarized light, and the second linearly polarized light may include S-polarized light.

To achieve the above-described objects, each of the first mirror and the phase retarder, used in the present invention, may include an element characterized to minimize deterioration in performance at a wide angle of incidence.

To achieve the above-described objects, in the display device according to the present invention, all of the second linearly polarized light may pass through the first mirror, minimizing a difference in the brightness of the image formed on the windshield.

To achieve the above-described objects, in the display device according to the present invention, only a portion of the second linearly polarized light may pass through the first mirror and may be reflected by the windshield to form an image.

To achieve the above-described objects, in the display device according to the present invention, the display device may further include a Fresnel lens provided in a path of the second linearly polarized light so as to enlarge an image to be formed on the windshield.

To achieve the above-described objects, in the display device according to the present invention, the first mirror configured as the polarization reflection mirror may include a wire grid to achieve the same performance (transmittance of selectively polarized light and contrast) at a wide angle of incidence.

In addition, in the display device according to the present invention, the first mirror configured as the polarization reflection mirror may include an element to achieve the same performance (transmittance of selectively polarized light and contrast) at a wide angle of incidence.

Meanwhile, in the display device according to the present invention, the phase retarder may be configured as a polymer retarder to achieve the same performance (phase retardance) at a wide angle of incidence.

In addition, in the display device according to the present invention, the phase retarder may be configured as an element to achieve the same performance (phase retardance) at a wide angle of incidence.

In addition, in the display device according to the present invention, a third mirror may be additionally located to achieve an additional performance and an internal optical path.

Meanwhile, in accordance with another aspect of the present invention, a display device includes a display panel configured to generate an image containing driving information, a first mirror configured to divide light generated by the display panel into first transmitted light and first reflected light, and a second mirror configured to reflect the first reflected light, wherein second reflected light from the second reflector is divided into third reflected light and second transmitted light by the first mirror, and the second transmitted light is reflected by a windshield to thereby reach a driver.

In addition, the first mirror may be configured as a beam splitter.

In addition, the second mirror may be configured as a concave mirror.

It is to be understood that both the foregoing general description and the following detailed description of the present invention are exemplary and explanatory and are intended to provide further explanation of the present invention as claimed.

The accompanying drawings, which are included to provide a further understanding of the present invention and are incorporated in and constitute a part of this application, illustrate embodiment(s) of the present invention and together with the description serve to explain the principle of the present invention. In the drawings:
FIG. 1 is a view schematically illustrating the configuration of an HUD device in accordance with one embodiment of the related art;
FIG. 2 is a view schematically illustrating the configuration of an HUD device in accordance with another embodiment of the related art;
FIG. 3 is a view illustrating a display device in accordance with one exemplary embodiment of the present invention;
FIG. 4 is a view schematically illustrating the configuration of the display device in accordance with one exemplary embodiment of the present invention; and
FIG. 5 is a view schematically illustrating a display device in accordance with another exemplary embodiment of the present invention.

Hereinafter, exemplary embodiments of the present invention will be described in detail with reference to the accompanying drawings.

Meanwhile, the configuration or control method of a device that will be described hereinafter is provided for explanation of the embodiments of the present invention, and is not intended to limit the technical range of the present invention. The same reference numerals throughout the entire specification designate the same constituent elements.

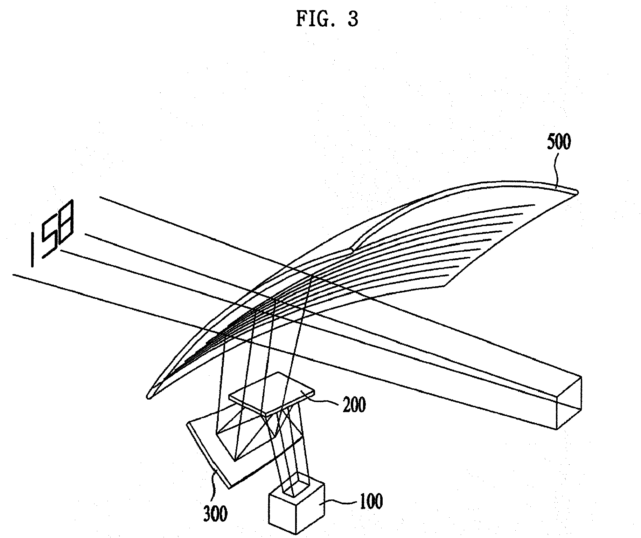

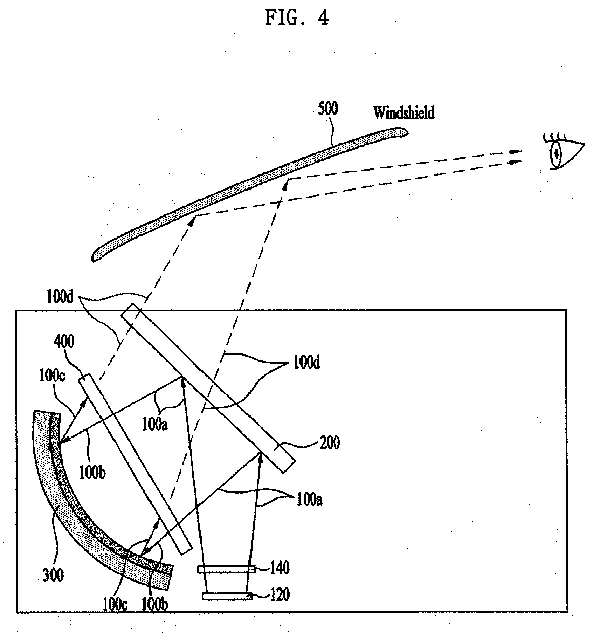

FIG. 3 is a view illustrating a display device in accordance with one exemplary embodiment of the present invention. In addition, FIG. 4 is a view schematically illustrating the configuration of the display device in accordance with one exemplary embodiment of the present invention.

Hereinafter, the display device in accordance with one exemplary embodiment of the present invention will be described with reference to FIGs. 3 and 4.

The display device of the present invention may include a light source 100, a first mirror 200, a phase retarder 400, and a second mirror 300.

The light source 100 is a generic term for devices that generate light, and here refers to a device that generates an image to be displayed on a windshield 500 in order to show driving information to a driver.

The image contains driver information to be provided to the driver, and the driver information may include, for example, the condition of the vehicle, information regarding the road on which the vehicle is being driven, or navigation information.

The light source 100 generates light that is linearly polarized in a given direction. That is, the light source 100 provides first linearly polarized light 100a that is linearly polarized in a given direction.

The polarized light means light in which the direction of an electric field is constant in any plane perpendicular to the direction in which the light travels.

The kinds of polarized light include linearly polarized light, circularly polarized light, and elliptically polarized light.

The linearly polarized light is light in which the direction in which the electric field of a light wave vibrates is perpendicular to the direction in which the light travels, and in which the amplitude of vibration is constant. The circularly polarized light is light in which the direction in which the electric field of a light wave vibrates rotates while remaining perpendicular to the direction in which the light travels, and in which the amplitude of vibration is constant. The elliptically polarized light is light in which the direction in which the electric field of a light wave vibrates elliptically rotates while remaining perpendicular to the direction in which the light travels, and in which the amplitude of vibration is not constant.

To provide the light that is linearly polarized in a given direction, the light source 100 includes a display panel 120, and a first polarizer 140 configured to polarize light emitted from the display panel 120.

The display panel 120 serves to generate an image to be transmitted to a user and to provide the image to the user. That is, the display panel 120 refers to a device that generates an image by controlling electrical signals. For example, the display panel 120 may include a Liquid Crystal Display (LCD) panel, a Light Emitting Diode (LED) panel, or an Organic Light Emitting Diode (OLED) panel. Here, note that the first polarizer 140 may be not necessary in the case where the display panel 120 includes a polarizer therein and functions to emit linearly polarized light, like an LCD panel.

The first polarizer 140 is configured as a linear polarizer that polarizes the light that forms the image provided on the display panel 120 in a given direction. As such, the light emitted from the display panel 120 is linearly polarized in a given direction once it has passed through the linear polarizer 140. In this case, the light emitted from the display panel 120 is changed into first linearly polarized light 100a that has been polarized in a given direction while passing through the first polarizer 140.

Meanwhile, the first mirror 200 reflects the first linearly polarized light 100a emitted from the light source 100.

The first mirror 200 reflects the first linearly polarized light 100a, which has been linearly polarized while passing through the first polarizer 140 after emitted from the light source 100 or the display panel 120, in the same manner as the previously described reflection mirror 20 of the conventional HUD device illustrated in FIG. 2.

However, unlike existing reflection mirrors, the first mirror 200 of the present invention reflects the first linearly polarized light 100a, but passes light that has been linearly polarized in a different direction from that of the first linearly polarized light 100a. That is, the first mirror 200 is configured as a polarization reflection mirror that reflects light polarized in a given direction, and passes light polarized in a direction perpendicular to the given direction.

For example, the first mirror 200 is provided to reflect P-polarized light when passing S-polarized light, and to reflect S-polarized light when passing P-polarized light.

At this time, the first mirror 200 must accommodate a wide range of angle of incidence due to the characteristics of the HUD device, and therefore must be configured as, for example, a wire grid, which minimizes deterioration in performance (e.g. transmittance/reflectance and contrast) depending on the angle of incidence. That is, any element capable of achieving the same performance (e.g. transmittance of selectively polarized light and contrast) at the wide angle of incidence may be used as the first mirror which serves as a polarization reflection mirror. This is necessary to provide an image having uniform brightness throughout the entire eye box in which the driver observes a virtual image, and to minimize the loss of light from the light source.

Meanwhile, the phase retarder 400 passes the first linearly polarized light 100a and converts the same into first circularly polarized light 100b that is circularly polarized. That is, once the light linearly polarized in a given direction has passed through the phase retarder 400, circularly polarized light is discharged.

The phase retarder 400 is a quarter-wave plate and must be configured such that the major axis of the quarter-wave plate is tilted by 45 degrees in relation to the direction in which the first circularly polarized light 100b vibrates. The phase retarder 400 serves to retard the phase of light introduced into the circular polarizer by a quarter wave.

The phase retarder converts the introduced linearly polarized light into right-handed circularly polarized light or left-handed circularly polarized light according to the direction in which the major axis is tilted. This is an inherent characteristic of the phase retarder.

In addition, the phase retarder must have the wide range of angle of incidence due to the characteristics of the HUD device, and therefore must be configured as, for example, a polymer retarder, which minimizes deterioration in performance (e.g. phase retardance variation) depending on the angle of incidence. That is, any element capable of achieving the same performance (phase retardance) at the wide angle of incidence may be used as the phase retarder of the present invention. This is necessary to provide an image having uniform brightness throughout the entire eye box in which the driver observes a virtual image, and to minimize the loss of light from the light source.

Meanwhile, the first circularly polarized light 100b is introduced into the second mirror 300 and is reflected as second circularly polarized light 100c.

The first circularly polarized light 100b is changed in the rotation direction of circularly polarized light while being reflected by the second mirror 300, thereby being converted into the second circularly polarized light 100c. For example, when the first circularly polarized light 100b is right-handed circularly polarized light, the converted second circularly polarized light 100c is left-handed circularly polarized light. When the first circularly polarized light 100b is left-handed circularly polarized light, the converted second circular polarized light 100c is right-handed circularly polarized light.

The display device in accordance with one exemplary embodiment of the present invention is configured in such a manner that the second circularly polarized light 100c reflected by the second mirror 300 passes the phase retarder 400 and the first mirror 200 in sequence to thereby reach the windshield 500.

The second circularly polarized light 100c, reflected by the second mirror 300, is converted into second linearly polarized light 100d while passing through the phase retarder 400. This is because the circularly polarized light is converted into linearly polarized light while passing through the phase retarder 400 in the form of a quarter-wave plate as described above.

Once the second circularly polarized light 100c has passed through the phase retarder 400, the second circularly polarized light 100c is changed into the second linearly polarized light 100d having a different direction from the polarization direction of the first linearly polarized light 100a. In other words, the directions of polarization of the first linearly polarized light 100a and the second linearly polarized light 100d are perpendicular to each other. For example, when the first linearly polarized light 100a is S-polarized light, the second linearly polarized light 100d is P-polarized light. When the first linearly polarized light 100a is P-polarized light, the second linearly polarized light 100d is S-polarized light.

In this case, the second linearly polarized light 100d may pass through the first mirror 200. This is because the first mirror 200 is provided to reflect the first linearly polarized light 100a and to pass the second linearly polarized light 100d as described above.

The second linearly polarized light 100d having passed through the first mirror 200 forms an image on the windshield 500, and the image contains information to be provided to the driver.

Accordingly, the first mirror 200 may be provided between the second mirror 300 and the windshield 500. That is, the first mirror 200 is provided in the path of the second linearly polarized light 100d. As such, the volume of the HUD device may be reduced compared to the case where it is difficult to provide the reflection mirror 20 between the concave mirror 30 and the windshield 500 as in the conventional HUD device of FIG. 2, and the distances between the inner components may be reduced, resulting in a display device having a compact configuration. This is because the light reflected by the concave mirror 30 cannot pass through the reflection mirror 20.

Meanwhile, the position of the first mirror 200 does not need to be determined such that all of the second linearly polarized light 100d passes through the first mirror 200. Minimizing the amount of second linearly polarized light 100d that passes through the first mirror 200 may minimize the loss in the intensity of an image formed on the windshield 500. For this reason, the volume of the HUD device may be reduced within a range in which the amount of second linearly polarized light 100d passing through the first mirror 200 is minimized.

However, in a case where only a portion of the second linearly polarized light 100d passes through the first mirror 200 so as to form an image on the windshield 500, the brightness of the image may differ between a portion that passes through the first mirror 200 and the remaining portion.

To solve this problem, the arrangement of the first mirror 200 may be adjusted so as to allow all of the second linearly polarized light 100d to pass through the first mirror 200. As such, the difference in the brightness of the image may be minimized, and the volume of the HUD device may be minimized, which may enhance the efficiency of use of space inside the vehicle when the HUD device is installed in the limited space inside the vehicle.

In addition, the phase retarder 400 is provided in the path of the second circularly polarized light 100c reflected by the second mirror 300. In other words, the phase retarder 400 must be positioned to allow both the light to be introduced into the second mirror 300 and the light reflected by the second mirror 300 to pass through the phase retarder 400. The position of the phase retarder 400 must be contemplated such that both the first circularly polarized light 100b and the second circularly polarized light 100c pass through the phase retarder 400.

Accordingly, the phase retarder 400 must be located close to the second mirror 300. Moreover, the phase retarder 400 may be secured to the second mirror 300. This may reduce the number of components within the HUD device.

Meanwhile, the second mirror 300 according to the present invention and the previously described concave mirror 30 of the conventional HUD device have the same function. That is, the second mirror 300 reflects light containing driver information to the windshield 500 so as to provide the driver with an image containing the driver information.

The second mirror 300 of the present invention is configured such that the light incident surface thereof has a concave curvature. That is, the second mirror 300 is configured as a concave mirror. In this case, although the radius of curvature of the second mirror 300 may be constant, the second mirror 300 may have an aspheric surface. By this, it is possible to minimize distortion that may occur at the outer portion of the image.

The display device of the present invention is configured such that the path along which the light travels from the light source 100 to the second mirror 300 is present within the focal length of the second mirror 300.

That is, the path of light from the light source 100 to the second mirror 300 must be shorter than the focal length of the second mirror 300.

In this case, when an object is present within the focal length of the second mirror 300, which has the form of a concave mirror, an image formed by light reflected by the second mirror 300 seems to be an erect image that is larger than the object. Thus, an image that is larger than the image from the light source 100 is projected onto the windshield 500, and the user can view a large screen image containing driving information.

In other words, the image formed by the second circularly polarized light 100c as the first circularly polarized light 100b is introduced into the second mirror 300 may be an erect virtual image.

Considering the operation of the display device according to the present invention, when P-polarized light is generated in the light source 100, the first mirror 200 reflects the P-polarized light, and the reflected light is converted into right-handed (or left-handed) circularly polarized light while passing through the phase retarder 400. Then, the light is converted into left-handed (or right-handed) circularly polarized light by being reflected by the second mirror 300 and is then converted into S-polarized light by again passing through the phase retarder 400, finally passing through the first mirror 200. The S-polarized light having passed through the first mirror 200 is reflected to the windshield 500, thereby forming an image providing information to the driver.

In contrast, when S-polarized light is generated in the light source 100, the first mirror 200 reflects the S-polarized light, and the reflected light is converted into right-handed (or left-handed) circularly polarized light while passing through the phase retarder 400. Then, the light is converted into left-handed (or right-handed) circularly polarized light by being reflected by the second mirror 300 and is then converted into P-polarized light by again passing through the phase retarder 400, finally passing through the first mirror 200. The S-polarized light having passed through the first mirror 200 is reflected to the windshield 500, thereby forming an image providing information to the driver.

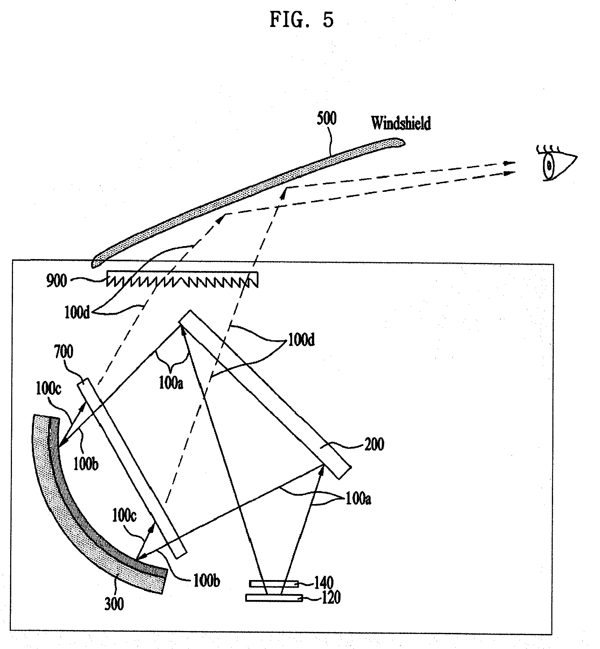

FIG. 5 is a view schematically illustrating a display device in accordance with another exemplary embodiment of the present invention.

Hereinafter, the configuration of the display device in accordance with another exemplary embodiment of the present invention, which may reduce the difference in the paths of light, will be described.

The display device in accordance with another exemplary embodiment of the present invention further includes a first optical lens 900 in the path of the second linearly polarized light 100d.

The first optical lens 900 may be a Fresnel lens. The Fresnel lens is a condensing lens that serves to gather light, like a convex lens while having a reduced thickness. Here, the reason why the lens having a reduced thickness can serve as a convex lens is that the lens is divided into several bands such that each band acts as a prism.

Accordingly, the first optical lens 900 enables the display of a larger image than an image that can be formed on the windshield 500 by the second linearly polarized light 100d. Through the use of the Fresnel lens, the sizes of the first mirror 200 and the second mirror 300 may be reduced compared to the case where the same size of image is formed on the windshield 500.

In this case, the Fresnel lens may be provided in the path of the second linearly polarized light 100d so that all of the second linearly polarized light 100d passes through the Fresnel lens.

Meanwhile, although not illustrated in the drawings, in the present invention, a third mirror may be additionally located to achieve additional performances of the HUD device as well as internal optical paths.

Hereinafter, a display device in accordance with a further exemplary embodiment of the present invention will be described with reference to FIG. 4.

The display device in accordance with the present exemplary embodiment of the present invention may include the display panel 120, the first mirror 200, the second mirror 300, and the windshield 500.

The display panel 120 may provide an image containing, for example, driving information to be provided to the driver, and the driver information may include, for example, the current condition of the vehicle, information regarding the road on which the vehicle is being driven, the condition of the surrounding environment, or navigation information. The image provided by the display panel 120 is light that is not yet polarized, and the display panel may be an LCD panel, an LED panel, or an OLED panel.

The first mirror 200 may be configured as a beam splitter. The beam splitter is used to split introduced light into two at a designated ratio. A portion of light introduced into the beam splitter passes through the beam splitter, and the remaining portion of light is reflected by the beam splitter.

The kinds of the beam splitter may include a flat plate beam splitter and a cube beam splitter. One example of the flat plate beam splitter may be a half mirror.

The second mirror 300 is configured as a concave mirror, the light incident surface of which has a concave curvature. Although the radius of curvature of the second mirror 300 may be constant, the second mirror 300 may have an aspheric surface. By this, it is possible to minimize distortion that may occur at the outer portion of the image.

Light generated in the display panel 120 is introduced into the first mirror 200. The first mirror 200 is the beam splitter to divide the light generated in the display panel 120 into first transmitted light that has passed through the first mirror 200 and first reflected light that has been reflected by the first mirror 200.

Although the first transmitted light may be refracted and changed in the direction in which the light travels according to the kind of the beam splitter, most of the first transmitted light moves straight toward the windshield 500. The first transmitted light may be reflected by the windshield 500 so as to reach the driver's eyes and to form a virtual image in front of the windshield 500. However, the first transmitted light is not enlarged by the second mirror 300, and therefore is not used to form a virtual image that transmits driving information to the driver in practice.

Meanwhile, the first reflected light may be introduced into the second mirror 300 and may be reflected and enlarged by the second mirror 300 that is the concave mirror. The reflected and enlarged light may be defined as second reflected light.

Some or all of the second reflected light may be introduced into the first mirror 200. In this case, the second reflected light is divided into second transmitted light that has passed through the first mirror 200 and third reflected light that has been reflected by the first mirror 200.

Although the third reflected light may again be reflected by the second mirror 300 and returned to the first mirror 200, the amount of the returned light is considerably small, or the path of light considerably deviates from a range in which the light can reach the driver's eyes. Thus, the returned light is negligible.

The second transmitted light is introduced into the windshield 500. Then, the second transmitted light is reflected by the windshield 500 to thereby reach the driver's eyes. The driver can view a virtual image formed in front of the windshield 500.

For example, assuming that the loss of reflection or transmission at the first mirror 200 and the second mirror 300 is zero and that the ratio of reflection to transmission at the first mirror 200 is 1:1, light (100%) generated in the display panel 120 is divided into first transmitted light (50%) and first reflected light (50%) by the first mirror 200, and the first reflected light (50%) is reflected by the second mirror 300 and becomes second reflected light (50%), and in turn the second reflected light (50%) is divided into second transmitted light (25%) and third reflected light (25%) while passing through the first mirror 200. In this way, only the second transmitted light (25%0 reaches the windshield 500. That is, only the second transmitted light (25%) of the light (100%) generated in the display panel 120 may reach the windshield 500 so as to form a virtual image in front of the windshield 500.

Although forming the virtual image in front of the windshield 500 using light of approximately 25% may cause low resolution, no phase retarder or polarizer is required, which may result in a reduction in the volume of the display device.

As is apparent from the above description, the present invention may have the effect of enhancing the driving efficiency of a driver and improving the safety of driving through the provision of a display device which provides a HUD device.

In addition, the present invention has the effect of providing the driver with large amounts of information through the provision of the display device, which enables an increase in the size of a virtual image displayed on a windshield, thereby providing a large screen to realize the provision of various pieces of information.

In addition, the present invention has the effect of allowing the display device to occupy only a minimal space inside the vehicle through the provision of the device, which may have a reduced volume thereof, thereby ensuring the efficient use of space when installed inside a vehicle.

In addition, the present invention has the effect of reducing the space occupied by the display device and ensuring the efficient use of space inside the vehicle through the provision of a display device, which enables a compact configuration to be realized thanks to minimal distances between inner components.

## Claims

1. A display device comprising:
a light source (100) configured to provide first linearly polarized light (100a) that is linearly polarized in a given direction;
a first mirror (200) configured to reflect the first linearly polarized light (100a);
a phase retarder (400) configured to convert the first linearly polarized light (100a) reflected from the first mirror (200), passing therethrough, into first circularly polarized light (100b); and
a second mirror (300) configured to cause the first circularly polarized light (100b), introduced thereinto, to be reflected as second circularly polarized light (100c),
wherein the second circularly polarized light (100c) is converted into second linearly polarized light (100d), which is linearly polarized in a different direction from that of the first linearly polarized light (100a), while passing through the phase retarder (400),
wherein the first mirror (200) is configured as a polarization reflection mirror to reflect the first linearly polarized light (100a) and to pass the second linearly polarized light (100d), and wherein the first mirror (200) is provided in a path of the second linearly polarized light (100d), and
wherein the second linearly polarized light (100d) passes through the first mirror (200) and is reflectable by a windshield (500) so as to transmit an image to a user.

2. The display device according to claim 1, wherein the light source (100) includes:
a display panel (120) configured to provide an image to be transmitted to the user; and
a first polarizer (140) configured to linearly polarize light, provided by the display panel (120), in a given direction.

3. The display device according to claim 1 or 2, wherein the second circularly polarized light (100c) reflected by the second mirror (300) forms an image, and the image is an erect virtual image.

4. The display device according to any one of claims 1 to 3, wherein the second mirror (300) has an incident surface of the first circularly polarized light (100b), and the incident surface has a concave curvature.

5. The display device according to any one of claims 1 to 4, wherein a path of light from the light source (100) to the second mirror (300) is present within a focal length of the second mirror (300).

6. The display device according to any one of claims 1 to 5, wherein the phase retarder (400) is a quarter-wave plate configured to convert a phase of light passing therethrough by a quarter wave.

7. The display device according to any one of claims 1 to 6, wherein the first linearly polarized light (100a) includes any one of S-polarized light and P-polarized light, and the second linearly polarized light (100d) includes the other polarized light.

8. The display device according to any one of claims 1 to 7, wherein all of the second linearly polarized light (100d) passes through the first mirror (200), minimizing a difference in the brightness of the image formed on the windshield (500).

9. The display device according to any one of claims 1 to 7, wherein only a portion of the second linearly polarized light (100d) passes through the first mirror (200) and is reflectable by the windshield (500) to form an image.

10. The display device according to any one of claims 1 to 9, further comprising a Fresnel lens provided in a path of the second linearly polarized light (100d) so as to enlarge an image to be formed on the windshield (500).

11. The display device according to any one of claims 1 to 10, wherein the first mirror (200) configured as the polarization reflection mirror includes a wire grid to achieve the same performance such as transmittance of selectively polarized light and contrast at a wide angle of incidence.

12. The display device according to any one of claims 1 to 11, wherein the phase retarder (400) is configured as a polymer retarder to achieve the same performance in phase retardance at a wide angle of incidence.

13. A display device comprising:
a display panel (120) configured to generate an image containing driving information;
a first mirror (200) configured to divide light generated by the display panel into first transmitted light and first reflected light; and
a second mirror (300) configured to reflect the first reflected light,
wherein second reflected light from the second mirror is divided into third reflected light and second transmitted light by the first mirror, and the second transmitted light is reflectable by a windshield (500) to thereby reach a driver.

14. The display device according to claim 13, wherein the first mirror (200) is configured as a beam splitter.

15. The display device according to claim 14, wherein the second mirror (300) is configured as a concave mirror.
